# EUROPEAN PATENT APPLICATION

(11) **EP 2 983 160 A1**
(43) Date of publication of application: **10.02.2016**
(21) Application number: 13881259.9
(22) Date of filing: 01.04.2013
(51) Int. Cl.: G09G 3/02

(54) **PROJECTION DEVICE, HEAD-UP DISPLAY, CONTROL METHOD, PROGRAM, AND STORAGE MEDIUM**

(71) Applicant: Pioneer Corporation, Kawasaki-shi, Kanagawa 212-0031 (JP)
(72) Inventor: KOIKE, Katsuhiro, Kawagoe-shi Saitama 350-8555 (JP)
(74) Representative: Viering, Jentschura & Partner mbB Patent- und Rechtsanwälte
(86) International application number: PCT/JP2013/059877
(87) International publication number: WO 2014/162414

(57) **Abstract**

An image rendering device 1 includes lasers LD1 to LD3 and an image processing unit 31. The lasers LD1 to LD3 emit laser lights LR, LB, LG by which the MEMS mirror 12 scans a projection surface, respectively. The image processing unit 31 drives the lasers LD1 to LD3 based on the image input signal Si thereby to control the light intensity (amount of light) of each of the lasers. In this case, the image processing unit 31 controls the apparent intensity of each of the laser lights LR, LB, LG by performing pulse width modulation of the laser driving current IL of each laser LD1 to LD3.

## Description

### Technical Field

The present invention relates to a technical field of control of the intensity balance of light outputted by semiconductor laser element(s).

### Background Technique

Conventionally, there is proposed a technique for adjusting the intensity of laser light to be outputted. For example, in Patent Reference-1, there is proposed a technique of adjusting the amount of outputted light while keeping the output optical axis matched to the input optical axis. In this case, same polarization beam splitters whose transmittance is different depending on the polarization component are arranged to be symmetric with respect to a plane perpendicular to the rotational axis of an inner lens tube rotatably provided in an outer lens tube, and arranged to tilt by an angle θ with respect to the plane. Then, the linear-polarized light emitted from a laser light source is projected so that the light axis thereof coincides with the rotational axis of the inner lens tube, and the inner lens tube is rotated to be placed at a desirable position. Meanwhile, in Patent Reference-2, there is proposed a method of measuring the optical property of a semiconductor laser element in consideration of the kink effect that causes the light output of a laser to cease to linearly increase in proportion to the current.

### PRIOR ART REFERENCE

### PATENT REFERENCE

Patent Reference-1: Japanese Patent Application Laid-open under No. H11-258526
Patent Reference-2: Japanese Patent Application Laid-open under No. 2006-294999

### Disclosure of Invention

### PROBLEM TO BE SOLVED BY THE INVENTION

When a laser is driven by a current value which causes kink effect, the behavior of the laser could be uncertain, which leads to blinking of images. Generally, the kink effect is different depending on each laser. Thus, when the light is outputted without any consideration of the kink effect depending on each laser, the light intensity of the laser whose kink effect is great becomes relatively small, which causes a color deviation. In contrast, when the laser light is adjustedbasedon the technology according to Patent Reference-1, the size of the appliance thereof tends to be large.

The present invention has been achieved in order to solve the above problem. It is an object of the present invention to provide an projection device capable of rendering a wide range of gradations while suppressing the blinking and the color deviation of the displayed image.

### MEANS FOR SOLVING THE PROBLEM

One invention is a projection device which projects an image based on an image signal, the projection device including: at least one laser element configured to emit a light beam by which a scan unit scans a projection surface and a control unit configured to drive the at least one laser element based on the image signal to control intensity of the light beam, wherein the control unit controls apparent intensity of the light beam by performing pulse width modulation or flame modulation of driving current of the at least one laser element.

Another invention is a control method executed by a projection device which projects an image based on an image signal and which includes at least one laser element, the at least one laser element emitting a light beam by which a scan unit scans a projection surface, the control method including a control process to drive the at least one laser element based on the image signal to control intensity of the light beam, wherein the control process controls apparent intensity of the light beam by performing pulse width modulation or flame modulation of driving current of the at least one laser element.

Still another invention is a program executed by a projection device which projects an image based on an image signal and which includes at least one laser element, the at least one laser element emitting a light beam by which a scan unit scans a projection surface, the program making the projection device function as: a control unit configured to drive the at least one laser element based on the image signal to control intensity of the light beam, wherein the control unit controls apparent intensity of the light beam by performing pulse width modulation or flame modulation of driving current of the at least one laser element.

### BRIEF DESCRIPTION OF THE DRAWINGS

FIG. 1 illustrates a configuration of an image rendering device according to embodiments.
FIG. 2 illustrates a graph indicating the relationship between laser driving current and the amount of light outputted from a predetermined laser.
FIG. 3 indicates the magnitude of the laser driving current and the pulse width per pixel necessary for a predetermined laser to display each gradation.
FIGS. 4A and 4B illustrate an example of display control to change the laser driving current without changing the duty ratio with respect to pixels P1 to P4.
FIGS. 5A to 5D illustrate the display control of pixels P1 to P4 based on pulse width modulation of the laser driving current.
FIG. 6 indicates the magnitude of the laser driving current and the pulse width per pixel necessary for a predetermined laser to display each gradation at any pixel according to the second embodiment.
FIG. 7 illustrates a configuration example of a head-up display equipped with a light source unit to which the image rendering device is applied.
FIGS. 8A to 8D each illustrates the magnitude of the laser driving current necessary to render gradations per frame in a case that the gradations are rendered by four frames.

### DETAILED DESCRIPTION OF THE PREFERRED EMBODIMENTS

According to a preferable embodiment of the present invention, there is provided a projection device which projects an image based on an image signal, the projection device including: at least one laser element configured to emit a light beam by which a scan unit scans a projection surface and a control unit configured to drive the at least one laser element based on the image signal to control intensity of the light beam, wherein the control unit controls apparent intensity of the light beam by performing pulse width modulation or flame modulation of driving current of the at least one laser element.

The projection device includes at least one laser element and a control unit. The at least one laser element is configured to emit a light beam by which a scan unit scans a projection surface. The control unit is configured to drive the at least one laser element based on the image signal to control intensity of the light beam. In this case, the control unit controls the apparent intensity of the light beam by performing pulse width modulation or flame modulation of driving current of the at least one laser element. According to this configuration, the projection device can precisely render a wide range of gradations even if the accurately-controllable range of the intensity of the laser beam of the at least one laser element is limited.

In one mode of the projection device, the control unit performs the pulse width modulation or the flame modulation while keeping the driving current of the at least one laser element to such a current value that kink effect of the at least one laser element does not occur. According to this mode, the projection device can precisely render a wide range of gradations without being influenced by the kink effect.

In another mode of the projection device, the control unit performs the pulse width modulation or the flame modulation of the driving current of the at least one laser element only if the at least one laser element emits the light beam whose intensity is lower than the intensity of the light beam of the at least one laser element driven by any current value that kink effect of the at least one laser element does not occur. According to this mode, the projection device can suppress the increase of the clock frequency because of the modulation.

In another mode of the projection device, the at least one laser element includes a plurality of laser elements each of which functions as the laser elements and emits a light beam of a different color, and the control unit performs the pulse width modulation or the flame modulation of each driving current of the laser elements. According to this mode, the projection device can precisely render a wide range of gradations outputted by each laser element corresponding to each color thereby to keep a proper color balance.

In another mode of the projection device, the control unit sets a target gradation of the pulse width modulation or the flame modulation with respect to each of the laser elements in common, and sets the target gradation to such a gradation that at least one of the laser elements causes kink effect. According to this mode, the projection device can suppress the color deviation due to the pulse width modulation or the frame modulation.

In another mode of the projection device, the projection device further includes an acquisition unit configured to acquire information for determining a desirable luminance of the image to be projected, and the control unit drives the at least one laser element based on the information and the image signal to control the apparent intensity of the light beam. Even in this case, the pulse widthmodulation or the frame modulation of the driving current of the at least one laser element enables the projection device to render various gradations. Thus, the projection device can properly render an image based on the specified luminance.

According to another preferable embodiment of the present invention, there is provided a head-up display including the above-mentioned projection device and making an observer visually recognize the image as a virtual image. Generally, a head-up display needs to render a wide range of gradations because it displays a virtual image under various environments whose brightness is different. Thus, by including the above-mentioned projection device, the head-up display can properly display the virtual image under various environments whose brightness is different.

According to another preferable embodiment of the present invention, there is provided a control method executed by a projection device which projects an image based on an image signal and which includes at least one laser element, the at least one laser element emitting a light beam by which a scan unit scans a projection surface, the control method including a control process to drive the at least one laser element based on the image signal to control intensity of the light beam, wherein the control process controls apparent intensity of the light beam by performing pulse width modulation or flame modulation of driving current of the at least one laser element. By executing the control method, the projection device can precisely render a wide range of gradations even if the accurately-controllable range of the intensity of the laser beam of the at least one laser element is limited.

According to another preferable embodiment of the present invention, there is provided a program executed by a projection device which projects an image based on an image signal and which includes at least one laser element, the at least one laser element emitting a light beam by which a scan unit scans a projection surface, the program making the projection device function as: a control unit configured to drive the at least one laser element based on the image signal to control intensity of the light beam, wherein the control unit controls apparent intensity of the light beam by performing pulse width modulation or flame modulation of driving current of the at least one laser element. By executing the program, the projection device can precisely render a wide range of gradations even if the accurately-controllable range of the intensity of the laser beam of the at least one laser element is limited. Preferably, the program is stored on a storage medium.

### EMBODIMENT

Preferred embodiments of the present invention will be explained hereinafter with reference to the drawings.

### [Configuration of Image Rendering Device]

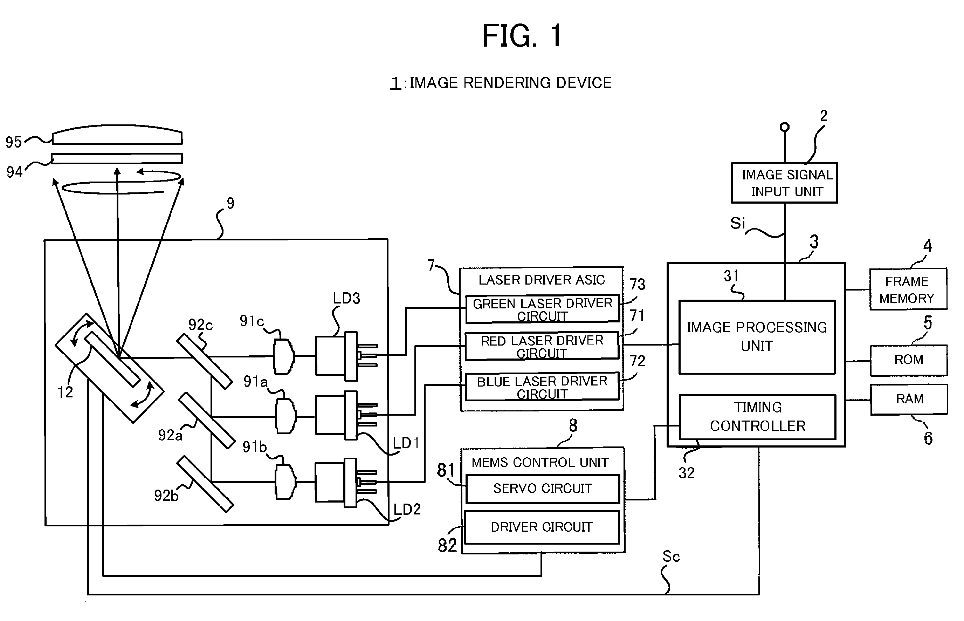

FIG. 1 illustrates the configuration of an image rendering device 1 in each embodiment to which the projection device according to the present invention is applied. As illustrated in FIG. 1, the image rendering device 1 includes an image signal input unit 2, a video ASIC 3, a frame memory 4, a ROM 5, a RAM 6, a laser driver ASIC 7, a MEMS control unit 8, a laser light source unit 9 and a MEMS mirror 12. The image rendering device 1 functions as a light source of a head-up display, for example, and emits light for displaying an image onto an optical element such as a combiner.

The image signal input unit 2 receives an image signal (referred to as "image input signal Si") from outside and outputs it to the video ASIC 3.

The video ASIC 3 is formed as an ASIC (Application Specific Integrated Circuit) and controls the laser driver ASIC 7 and the MEMS control unit 8 based on the image input signal Si inputted from the image signal input unit 2 and scanning position information "Sc" inputted from the MEMS mirror 12. The video ASIC 3 includes an image processing unit 31 and a timing controller 32.

The image processing unit 31 performs a predetermined signal processing based on the image input signal Si. Concretely, the image processing unit 31 separates the corrected image input signal Si into a synchronous signal and image data displayed on an image displaying unit, and writes the image data into the frame memory 4. The image processing unit 31 reads out the image data written into the frame memory 4, and converts the image data into bit data. Additionally, the image processing unit 31 converts the converted bit data into a signal (referred to as "light emission pattern signal") indicating a light emission pattern of each laser. It is noted that the light emission pattern signal includes information on the luminance of the emission of each laser, i.e., the amount of the light (i.e., light intensity) emitted from each laser. Furthermore, in order to suppress the color deviation due to the kink effect of each laser LD1 to LD3, the image processing unit 31 corrects the image input signal Si or the light emission pattern signal. The image processing unit 31 is an example of "the control unit" according to the present invention.

The timing controller 32 controls an operation timing of the image processing unit 31. The timing controller 32 also controls an operation timing of the MEMS control unit 8 to be described later.

The image data separated by the image processing unit 31 is written into the frame memory 4. The ROM 5 stores a control program and data for operating the video ASIC 3. The ROM 5 according to the embodiment stores information on the kink properties of each laser. The RAM 6 functions as a working memory of the video ASIC 3, and the video ASIC 3 sequentially reads and writes various data of the RAM 6.

The laser driver ASIC 7 is formed as an ASIC and generates a signal for driving laser diodes provided in the laser light source unit 9 to be described later. The laser driver ASIC 7 includes a red laser driver circuit 71, a blue laser driver circuit 72 and a green laser driver circuit 73.

The red laser driver circuit 71 drives a red laser "LD1" by supplying a driving current to the red laser LD1 based on the light emission pattern signal outputted by the image processing unit 31. The blue laser driver circuit 72 drives a blue laser "LD2" by supplying a driving current to the blue laser LD2 based on the light emission pattern signal outputted by the image processing unit 31. The green laser driver circuit 73 drives a green laser "LD3" by supplying a driving current to the green laser LD3 based on the signal outputted by the image processing unit 31.

The MEMS control unit 8 controls the MEMS mirror 12 based on the signal outputted by the timing controller 32. The MEMS control unit 8 includes a servo circuit 81 and a driver circuit 82.

The servo circuit 81 controls the operation of the MEMS mirror 12 based on the signal from the timing controller 32.

The driver circuit 82 amplifies the control signal of the MEMS mirror 12, which is outputted by the servo circuit 81, to a predetermined level, and outputs the amplified signal.

The laser light source unit 9 emits the laser light based on the driving signals outputted by the laser driver ASIC 7. Concretely, the laser light source unit 9 mainly includes the red laser LD1, the blue laser LD2, the green laser LD3, collimator lenses 91a to 91c, reflection mirrors 92a to 92c, a microlens array 94 and a lens 95. Each of the lasers LD1 to LD3 is an example of "the at least one laser element" according to the present invention.

The red laser LD1 emits laser light (referred to as "red laser light LR") of red, and the blue laser LD2 emits laser light (referred to as "blue laser light LB") of blue, and the green laser LD3 emits laser light (referred to as "green laser light LG") of green. The collimator lenses 91a to 91c convert the red laser light LR, the blue laser light LB and the green laser light LG intoparallel lights, and emits the parallel lights to the reflection mirrors 92a to 92c. The reflection mirror 92b reflects the blue laser light LB, and the reflection mirror 92a transmits the blue laser light LB while reflecting the red laser light LR. The reflection mirror 92c transmits only the green laser light LG while reflecting the blue laser light LB and the red laser light LR. Thus, the MEMS mirror 12 is irradiated by the green laser light LG which passes through the reflection mirror 92c and the blue and the red laser lights LB and LR reflected by the reflection mirror 92c.

Each of the lasers LD1 to LD3 emits the light whose intensity is in accordance with the current (referred to as "laser driving current IL") supplied from the laser driver circuits 71 to 73. Each of the lasers LD1 to LD3 causes kink effect by which the outputted light intensity ceases to linearly increase in proportion to the supplied current. The kink effect occurs at the time of rendering a low luminance, and the current range where the kink effect occurs and the degree of the kink effect are different among the lasers LD1 to LD3. In consideration of the above fact, the image rendering device 1 according to the embodiment modulates the laser driving current IL to suppress the color deviation of the rendered image. Hereinafter, the range of the laser driving current IL in which the kink effect occurs is referred to as "kink current range Ikw".

The MEMS mirror 12 reflects the laser light transmitted from the reflection mirror 92c to the microlens array 94 that is an example of an EPE (Exit pupil Expander). In principle, under the control of the MEMS control unit 8, the MEMS mirror 12 operates to scan the microlens array 94 that functions as a screen in order to display an image inputted to the image signal input unit 2. Then, the MEMS mirror 12 outputs the scanning position information (for example, the angle of the mirror) to the video ASIC 3. On the microlens array 94, there is provided plural arranged microlenses, and the laser light reflected by the MEMS mirror 12 enters the microlens array 94. The lens 95 enlarges the image formed on the emitting surface of the microlens array 94.

### [First Embodiment]

Next, a description will be given of the kink correction according to the first embodiment. In summary, the image processing unit 31 performs pulse width modulation (Pulse Width Modulation) while fixing the laser driving current IL to a predetermined current value larger than any current value in the kink current range Ikw. Thereby, the image processing unit 31 properly displays any pixel whose luminance is low without being influenced by the kink effect.

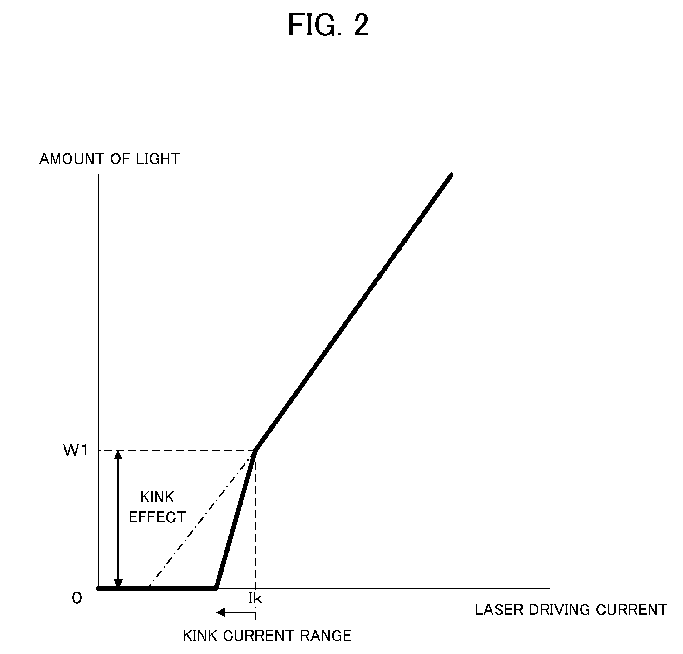

First, a description will be given of the kink current range Ikw with reference to FIG. 2. FIG. 2 illustrates a graph schematically indicating the relationship between the laser driving current IL and the amount of light outputted from a predetermined laser. According to the graph in FIG. 2, when the amount of light is lowered along with the laser driving current IL to the point that the laser driving current IL is equal to or smaller than the current value "Ik", the variation of the amount of the light to the laser driving current IL becomes non-linear and the variation rate of the amount of the light to the laser driving current IL becomes larger. Thus, in this case, the kink current range Ikw is equivalent to the range of the laser driving current IL equal to or lower than the current value Ik. When the light with a low luminance within the kink current range Ikw is outputted, the laser couldbehave in an erratic way and the displayed image could blink. The current value Ik that is the border value of the kink current range Ikw is different among the lasers.

In consideration of the above fact, with respect to each laser, the image processing unit 31 according to the first embodiment stores on the ROM 5 in advance either the kink current range Ikw in which the variation of the amount of the output light to the laser driving current IL becomes non-linear or the current value Ik that is the border value of the kink urrent range Ikw. Then, the image processing unit 31 generates the light emission pattern signal by applying the pulse width modulation to the laser driving current IL so that each of the lasers LD1 to LD3 is driven by the laser driving current IL which deviates from the kink current range Ikw thereof.

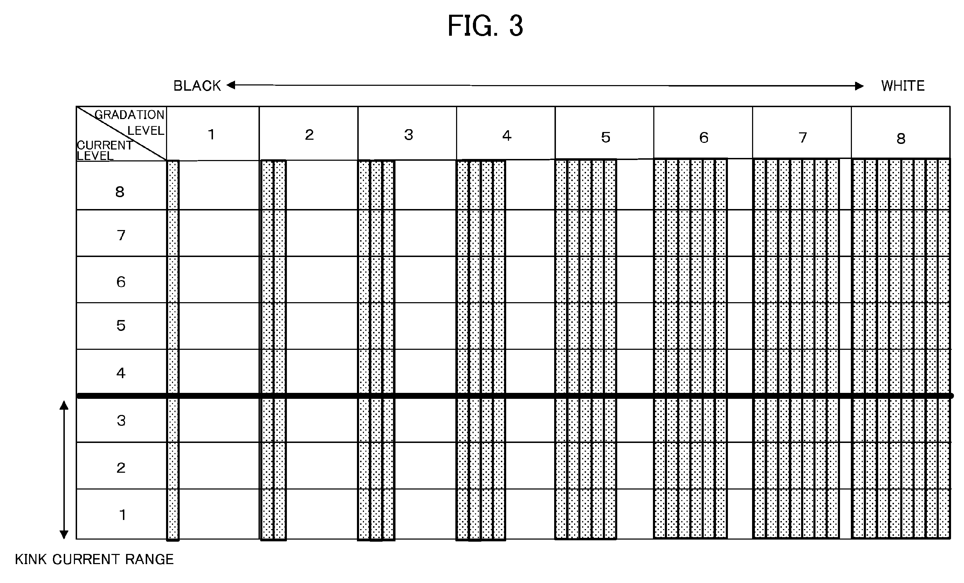

Next, a description will be given of the pulse width modulation of the laser driving current IL with reference to FIG. 3.

FIG. 3 indicates the magnitude of the laser driving current IL and the pulse width per pixel necessary for a predetermined laser to render each gradation (tone). In the case of FIG. 3, current values possibly set to the laser driving current IL and the gradations to be possibly rendered by the laser light are classified into eight levels from Level 1 to Level 8, respectively. Under such a condition that the duty ratio is fixed to 1 and the kink effect is ignored, it is herein assumed that each laser driving current IL at Level 1 to Level 8 is necessary to render each gradation at Level 1 to Level 8, respectively. In the case of FIG. 3, the kink current range Ikw corresponds to the range of the current value from Level 1 to Level 3.

In this case, regardless of the gradation level to be rendered, the image processing unit 31 fixes the laser driving current IL to the current value at Level 8 that is the highest and sets the duty ratio so that the lower the gradation level to be rendered is, the lower the duty ratio becomes. Concretely, the image processing unit 31 applies the laser driving current IL of Level 8 at the duty ratio 1/8 to render the gradation at Level 1. In the same way, the image processing unit 31 applies the laser driving current IL of Level 8 at the duty ratio 2/8 to 8/8 to render the gradations at Level 2 to Level 8, respectively.

In this way, by changing the duty ratio while fixing the laser driving current IL to a current value deviating from the kink current range Ikw, the image processing unit 31 can properly render even a pixel whose luminance is low.

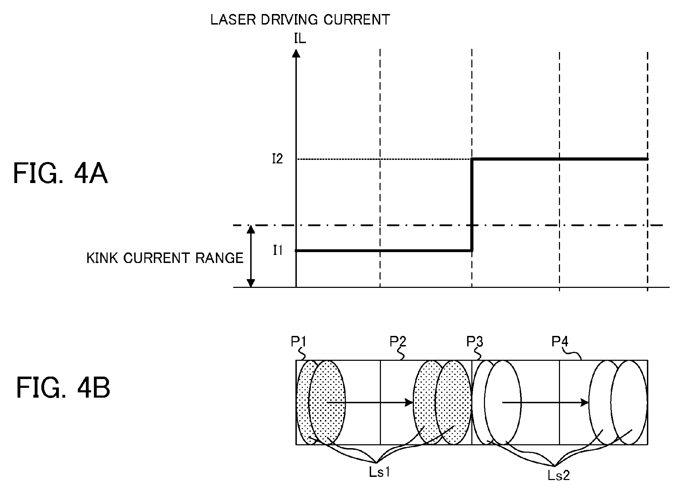

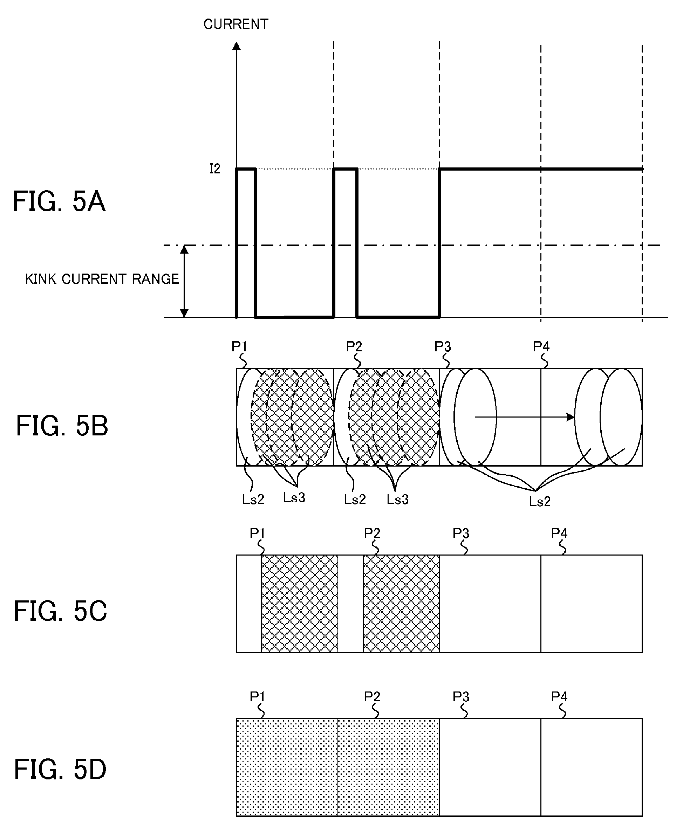

Next, a supplemental description will be given of the effect of the first embodiment with reference to FIGS. 4A, 4B and 5A to 5D. FIGS. 4A and 4B illustrate a comparison example of the display control to change the magnitude of the laser driving current IL without changing the duty ratio with respect to pixels "P1" to "P4". Concretely, FIG. 4A illustrates the time variation of the laser driving current IL in the case of rendering the pixels P1 to P4, and FIG. 4B illustrates the transition of the laser light which scans the pixels P1 to P4. FIG. 4B illustrates the laser light "Ls1" with a low luminance on the assumption that the laser driving current IL is a current value "I1" and the laser light "Ls2" with a high luminance on the assumption that the laser driving current IL is a current value "12".

In the case of the comparison example illustrated in FIGS. 4A and 4B, the image processing unit 31 renders the pixels P1 and P2 by setting the laser driving current IL to the current value I1 in the kink current range Ikw while rendering the pixels P3 and P4 by setting the laser driving current IL to the current value 12 which deviates from the kink current range Ikw. In this case, because the laser driving current IL regarding the pixels P1 and P2 is set to the current value I1 in the kink current range Ikw, the real amount of the light deviates from the target amount of the light due to the kink effect. The kink effect is different among laser lights. As a result, the image processing unit 31 cannot render the pixels P1 and P2 at a proper luminance and color.

FIGS. 5A to 5D illustrate the display control of pixels P1 to P4 based on the pulse width modulation in which the laser driving current IL is fixed. Concretely, FIG. 5A illustrates the time variation of the laser driving current IL in the case of displaying the pixels P1 to P4. FIG. 5B illustrates the transition of the laser light which scans the pixels P1 to P4. FIG. 5C illustrates the appearance of the pixels P1 to P4 in the case that they are observed at a close distance. FIG. 5D illustrates the appearance of the pixels P1 to P4 in the case that they are observed at a normal distance. FIG. 5B illustrates not only the laser light Ls2 with a high luminance in the case that the laser driving current IL is the current value "I2" but also the imaginary laser light "Ls3" in the case that the laser driving current IL is not applied.

When rendering the pixels P1 and P2 with a low luminance in the case of FIGS. 5A to 5D, the image processing unit 31 adjusts the duty ratio while fixing the laser driving current IL to the current value 12 which deviates from the kink current range Ikw. Thereby, unlike the comparison example illustrated in FIGS. 4A and 4B, the image processing unit 31 does not need to set the laser driving current IL to the current value I1 within the kink current range Ikw. Thus, the image processing unit 31 can suppress the unbalance regarding the color and the luminance at the pixels P1 and P2 with a low luminance.

When the duty ratio is controlled based on the first embodiment, a high luminance part irradiated by the laser light Ls2 and the other low luminance part exist within the pixels P1 and P2 as illustrated in FIG. 5C. Even in this case, as illustrated in FIG. 5D, when observing it at a normal state, the observer perceives the pixels P1 and P2 at such a luminance that the luminance of the above-mentioned high luminance part and the luminance of the low luminance part are averaged. Thus, according to the embodiment, the image processing unit 31 can precisely render low luminance pixels.

As mentioned above, the image rendering device 1 according to the first embodiment includes the lasers LD1 to LD3 and the image processing unit 31. The lasers LD1 to LD3 emit the laser light LR, LB, LG by which the MEMS mirror 12 scans a projection surface. The image processing unit 31 drives the lasers LD1 to LD3 based on the image input signal Si thereby to control the light intensity (amount of light) of each of the lasers. In this case, the image processing unit 31 controls the apparent intensity of each laser light LR, LB, LG by performing the pulse width modulation of the laser driving current IL of each laser LD1 to LD3. Thereby, the image rendering device 1 can precisely express a wide range of the gradations by setting the laser driving current IL to a current value which deviates from the kink current range Ikw.

### [Second Embodiment]

According to the second embodiment, the image processing unit 31 performs the pulse width modulation only when rendering such a gradation that causes the kink effect. In contrast, when rendering a gradation which does not cause the kink effect, the image processing unit 31 adjusts the magnitude of the laser driving current IL while fixing the duty ratio. This leads to reduction of the necessary clock frequency through the reduction of the modulation frequency.

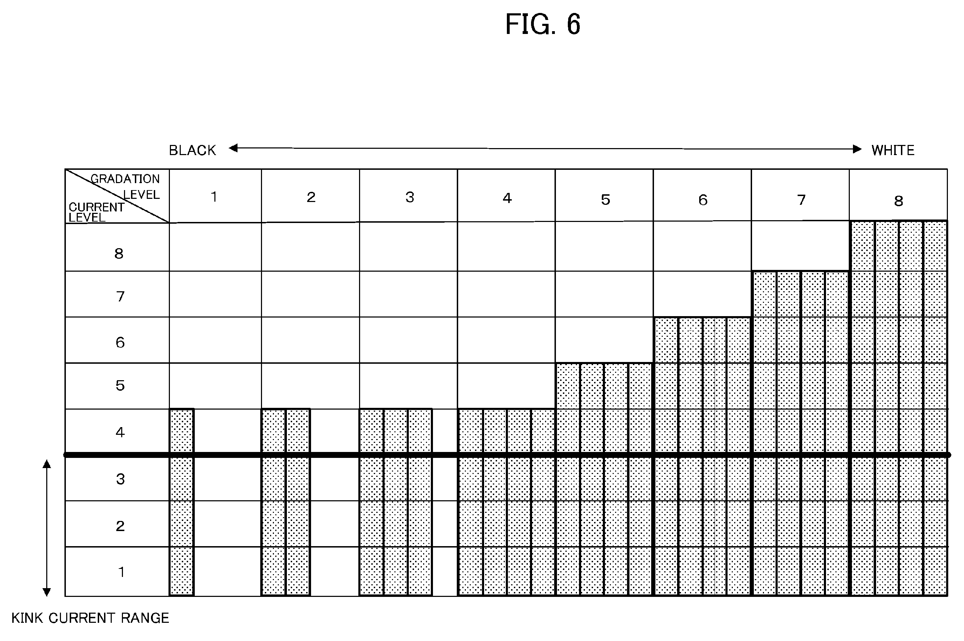

FIG. 6 indicates the magnitude of the laser driving current IL and the pulse width per pixel necessary for a predetermined laser to render each gradation according to the second embodiment. In the case of FIG. 6, as with the case of FIG. 3, the range of the current values from Level 1 to Level 3 are included in the kink current range Ikw.

In the case of FIG. 6, when rendering the gradations at Level 4 to Level 8 corresponding to the current values at Level 4 to Level 8 which deviate from the kink current range Ikw, the image processing unit 31 does not perform the pulse width modulation. Namely, in this case, the image processing unit 31 sets the laser driving current IL to the current value necessary to render each of the gradations while fixing the duty ratio to 1.

In contrast, when rendering the gradations at Level 1 to Level 3 corresponding to the current values at Level 1 to Level 3 within the kink current range Ikw, the image processing unit 31 performs the pulse width modulation in the same way as the first embodiment while fixing the laser driving current IL to such a current value that deviates from the kink current range Ikw. In the case of this example, the image processing unit 31 fixes the laser driving current IL to the current value at Level 4 that is the lowest level among Level 4 to Level 8 each of which deviates from the kink current range Ikw. In this case, the lower the level of the gradation to be rendered is, the smaller the duty ratio which the image processing unit 31 sets becomes in stages. In the case of FIG. 6, the image processing unit 31 sets the duty ratio to 1/4 when rendering the gradation at Level 1, and sets the duty ratio to 2/4 when rendering the gradation at Level 2, and sets the duty ratio to 3/4 when rendering the gradation at Level 3.

Next, a supplemental description will be given of the effect of the second embodiment. In the case of the first embodiment, the more the number of the gradations to be rendered increases, the larger the necessary clock frequency becomes. For example, regarding the example of FIG. 3, since the number of the gradations is 8, its necessary clock frequency is eight times as large as the necessary clock frequency in the case of the fixed duty ratio as the comparison example illustrated in FIG. 4. Furthermore, generally, the higher the clock frequency is, the more the control of the laser driving current IL becomes difficult due to the rounding of the rising waveform of the lasers and electric circuits.

Above things considered, the image processing unit 31 according to the second embodiment adjusts the duty ratio only when the rendering the gradations corresponding to current values within the kink current range Ikw. Thereby, the image processing unit 31 according to the second embodiment reduces the necessary clock frequency compared to the first embodiment. For example, the necessary clock frequency in the case of FIG. 6 is merely half of the necessary clock frequency in the case of FIG. 3. Thus, the image processing unit 31 according to the second embodiment can properly render low luminance pixels while reducing the necessary clock frequency compared to the case that the pulse width modulation is performed with respect to all gradations to be rendered.

Preferably, the image processing unit 31 sets the common target gradations (Level 1 to Level 3 in the case of FIG. 3) of the frame modulation among the lasers LD1 to LD3. In this case, preferably, when the kink current range Ikw was different among the lasers LD1 to LD3, the image processing unit 31 determines the target gradation of the pulse width modulation in accordance with the widest kink current range Ikw. In other words, when rendering such a gradation that causes the kink effect in at least one of the lasers LD1 to LD3, the image processing unit 31 performs the pulse width modulation in common with respect to the lasers LD1 to LD3. Thereby, the image processing unit 31 can suppress the deterioration of the display due to the pulse width modulation.

### [Applications]

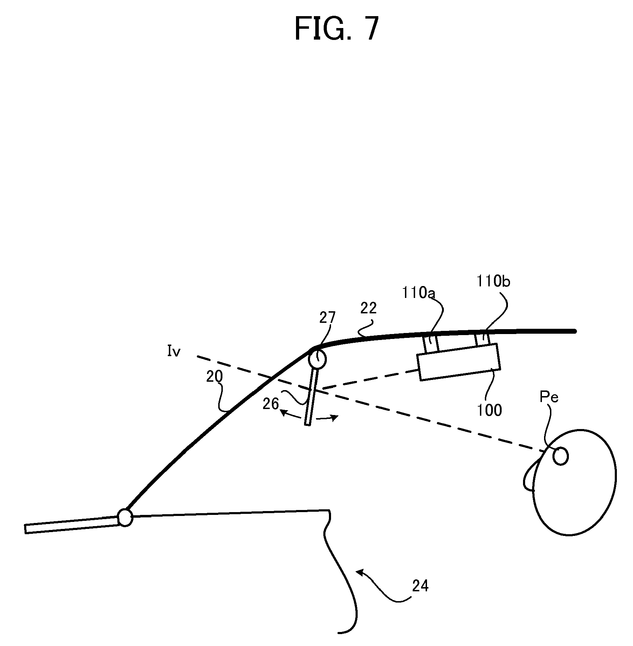

The above-mentioned image rendering device 1 is preferably applied to a head-up display. The concrete example thereof will be explained with reference to FIG. 7.

FIG. 7 illustrates a configuration example of a head-up display equipped with a light source unit 100 to which the image rendering device 1 is applied. The head-up display illustrated in FIG. 7 makes the driver visually recognize the virtual image "Iv" through the combiner 26 based on the light emitted from the light source unit 100.

According to the configuration illustrated in FIG. 7, the light source unit 100 functions as the image rendering device 1 in the above-mentioned embodiment. The light source unit 100 is provided on the ceiling board 22 in the vehicle interior through the support parts 110a and 110b, and emits towards the combiner 26 the light for displaying an image illustrating information (referred to as "driving assist information") such as map information indicating the present position, route guide information and a running speed. Concretely, the light source unit 100 generates an original image (real image) of the display image in the light source unit 100, and emits the light for displaying the image towards the combiner 26 thereby to let the driver visually recognize the virtual image Iv.

The display image emitted from the light source unit 100 is projected onto the combiner 26 and the combiner 26 shows the display image as the virtual image Iv by reflecting the display image towards the eye point "Pe" of the driver. The combiner 26 has a support shaft 27 provided on the ceiling board 22 and rotates on the support shaft 27. The support shaft 27 is provided on the ceiling board 22 near the top edge of the front window 20, i.e., near the position of a sun visor (not shown) for the driver.

According to the head-up display illustrated in FIG. 7, the user can visually recognize the driving assist information indicated by the virtual image Iv without feeling any color deviation and/or blinking due to the kink effect. The advantage thereof will be described below. Generally, since a head-up display displays a virtual image Iv under environments with various brightness from daytime to nighttime unlike a normal projector used in a room, it is desirable for the head-up display to be capable of rendering a wide range of gradations including a low luminance part which causes the kink effect. Thus, the head-up display is equipped with the light source unit 100 functioning as the image rendering device 1, and drives each lasers by using the laser driving current IL set to a current value which deviates from the kink current range Ikw. Thereby, it is possible to precisely render a wide range of gradations.

Preferably, the head-up display includes a sensor sensing the amount of natural light, and the light source unit 100 changes the luminance of the virtual image Iv based on the output of the sensor. For example, the light source unit 100 determines that the smaller the amount of the natural light is, the lower the brightness necessary for the driver to visually recognize the virtual image Iv becomes. Thus, the light source unit 100 sets the luminance of the virtual image Iv so that the smaller the amount of the natural light is, the lower the luminance becomes. Similarly, the light source unit 100 may obtain information other than the amount of the natural light for determining the luminance of the virtual image Iv thereby to change the luminance of the virtual image Iv based on the information. For example, the light source unit 100 receives information on the on-off state of the head light from a control unit of the vehicle thereby to determines whether or not it is nighttime based on the information. Then, the light source unit 100 changes the luminance of the virtual image Iv in accordance with the recognized time zone. In another example, the light source unit 100 obtains information on the user setting concerning the luminance by sensing the user operation through buttons provided on the light source unit 100 or a remote controller apart from the light source unit 100. Then, the light source unit 100 drives each of the lasers LD1 to LD3 to set the luminance of the virtual image Iv in accordance with the luminance indicated by the information.

It is noted that the configuration of the head-up display to which the present invention can be applied is not limited to the configuration illustrated in FIG. 7. For example, the head-up display may not have the combiner 26. In this case, the light source unit 100 may project the light onto the front window 20 thereby to let the front window 20 reflect the light for displaying the image to the eye point Pe of the driver. In addition, the mounting position of the light source unit 100 is not limited to the ceiling board 22. Instead, the light source unit 100 may be provided inside the dashboard 24. In this case, the dashboard 24 has an opening for letting the light pass into the combiner 26 or the front window 20.

### [Modification]

Next, a description will be given of preferred modifications of the first and the second embodiments.

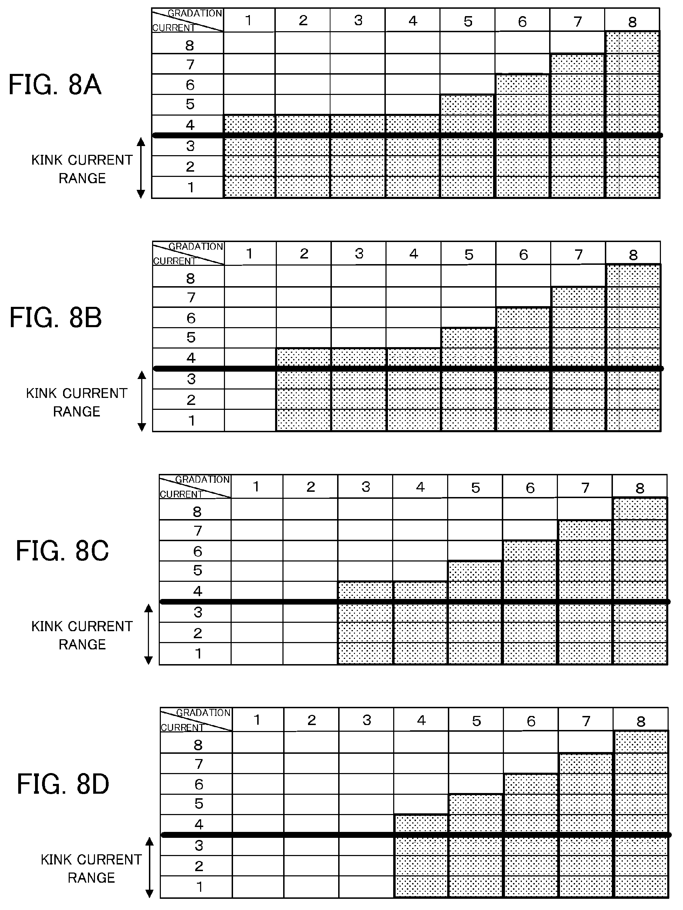

The image processing unit 31 may render the gradations which cause the kink effect by means of frame modulation (FRC: Frame Rate Control) instead of or in addition to pulse width modulation. Namely, according to the modification, the image processing unit 31 renders the gradations of each pixel by using the average of plural frame (referred to as "unit frame group Fs") in consideration of such a human property that when two colors are rapidly switched, an observer perceives it as an intermediate color thereof. A description thereof will be given with reference to FIGS. 8A to 8D.

FIGS. 8A to 8D each illustrates the magnitude of the laser driving current IL necessary to render each gradation per frame in a case that the gradations are rendered by four frames.

In the case of FIGS. 8A to 8D, regarding the gradations at Level 4 to Level 8 which can be rendered by a current value out of the kink current range Ikw, with respect to the first to the fourth frames, the image processing unit 31 sets the laser driving current IL to a current value at the corresponding level selected from Level 4 to Level 8 and applies it to a target laser. In this way, regarding the each gradation at Level 4 to Level 8 which can be rendered by a current value out of the kink current range Ikw, the image processing unit 31 sets the common laser driving current IL among the unit frame group Fs without performing the frame modulation.

In contrast, the image processing unit 31 performs the frame modulation with respect to each gradation at Level 1 to Level 3 corresponding to a current value within the kink current range Ikw. Concretely, when rendering each gradation at Level 1 to Level 3, the image processing unit 31 sets the laser driving current IL to a predetermined common current value (the current value at Level 4 in this case) which deviates from the kink current range Ikw. Then, the lower the level of the gradation is, the fewer the number of the frame to which the laser driving current IL is applied becomes. Specifically, when rendering the gradation at Level 1, the image processing unit 31 applies the laser driving current IL to the target laser only at the time of the first frame illustrated in FIG. 8A. When rendering the gradation at Level 2, the image processing unit 31 applies the laser driving current IL to the target laser at the time of the first frame illustrated in FIG. 8A and the second frame illustrated in FIG. 8B, and does not apply the laser driving current IL at the time of the third frame illustrated in FIG. 8C and the fourth frame illustrated in FIG. 8D. When rendering the gradation at Level 3, the image processing unit 31 applies the laser driving current IL to the target laser at the time of the first to the third frames illustrated in FIGS. 8A to FIGS. 8C, and does not apply the laser driving current IL at the time of the fourth frame illustrated in FIG. 8D.

Preferably, in this modification, the image processing unit 31 sets the number of the unit frame group Fs (four in case of FIGS. 8A to 8D) in common among the lasers LD1 to LD3, and sets the common target gradations of the frame modulation (Level 1 to Level 3 in case of FIGS. 8A to 8D) among the lasers LD1 to LD3. In this case, preferably, when the kink current range Ikw is different among the lasers, the image processing unit 31 determines the number of the unit frame group Fs and the target gradations of the frame modulation in accordance with the widest kink current range Ikw thereof.

Even by using the frame modulation, the image processing unit 31 can also render a low luminance pixel properly without being influenced by the kink effect.

### DESCRIPTION OF REFERENCE NUMBERS

- 1: Image rendering device
- 3: Video ASIC
- 7: Laser driver ASIC
- 8: MEMS control unit
- 9: Laser light source unit
- 12: MEMS mirror
- 100: Light source unit

## Claims

1. A projection device which projects an image based on an image signal, the projection device comprising:
at least one laser element configured to emit a light beam by which a scan unit scans a projection surface and
a control unit configured to drive the at least one laser element based on the image signal to control intensity of the light beam,
wherein the control unit controls apparent intensity of the light beam by performing pulse width modulation or flame modulation of driving current of the at least one laser element.

2. The projection device according to claim 1, wherein the control unit performs the pulse width modulation or the flame modulation while keeping the driving current of the at least one laser element to such a current value that kink effect of the at least one laser element does not occur.

3. The projection device according to claim 1 or 2, wherein the control unit performs the pulse width modulation or the flame modulation of the driving current of the at least one laser element only if the at least one laser element emits the light beam whose intensity is lower than the intensity of the light beam of the at least one laser element driven by any current value that kink effect of the at least one laser element does not occur.

4. The projection device according to any one of claims 1 to 3,
wherein the at least one laser element comprises a plurality of laser elements each of which emits a light beam of a different color, and
wherein the control unit performs the pulse width modulation or the flame modulation of each driving current of the laser elements.

5. The projection device according to claim 4, wherein the control unit sets a target gradation of the pulse width modulation or the flame modulation with respect to each of the laser elements in common, and sets the target gradation to such a gradation that at least one of the laser elements causes kink effect.

6. The projection device according to any one of claims 1 to 5, further comprising
an acquisition unit configured to acquire information for determining a desirable luminance of the image to be projected,
wherein the control unit drives the at least one laser element based on the information and the image signal to control the apparent intensity of the light beam.

7. A head-up display comprising the projection device according to any one of claims 1 to 6 and making an observer visually recognize the image as a virtual image.

8. A control method executed by a projection device which projects an image based on an image signal and which includes at least one laser element, the at least one laser element emitting a light beam by which a scan unit scans a projection surface, the control method comprising
a control process to drive the at least one laser element based on the image signal to control intensity of the light beam,
wherein the control process controls apparent intensity of the light beam by performing pulse width modulation or flame modulation of driving current of the at least one laser element.

9. A program executed by a projection device which projects an image based on an image signal and which includes at least one laser element, the at least one laser element emitting a light beam by which a scan unit scans a projection surface, the program making the projection device function as:
a control unit configured to drive the at least one laser element based on the image signal to control intensity of the light beam,
wherein the control unit controls apparent intensity of the light beam by performing pulse width modulation or flame modulation of driving current of the at least one laser element.

10. A storage medium storing the program according to claim 9.
